# EUROPEAN PATENT SPECIFICATION

(11) **EP 4 523 994 B1**
(45) Date of publication and mention of the grant of the patent: **04.11.2026**
(21) Application number: 23895576.9
(22) Date of filing: 20.09.2023
(51) Int. Cl.: B62B 3/02, B62B 5/06

(54) **MULTIFUNCTIONAL FOLDING TROLLEY**
ZUSAMMENKLAPPBARER MULTIFUNKTIONSHANDWAGEN
CHARIOT À MAIN PLIABLE MULTIFONCTIONNEL

(30) Priority: 28.07.2023 CN 202310948707
(43) Date of publication of application: 19.03.2025
(73) Proprietor: GUANGDONG SHUNHE INDUSTRIAL CO., LTD., Yangjiang, Guangdong 529500 (CN)
(72) Inventor: JIAN, Weiming, Yangjiang Guangdong 529500 (CN); JIAN, Shikun, Yangjiang Guangdong 529500 (CN); RUAN, Yongjun, Yangjiang Guangdong 529500 (CN); LUO, Yubao, Yangjiang Guangdong 529500 (CN); SHE, Dianhao, Yangjiang Guangdong 529500 (CN)
(74) Representative: Petraz, Gilberto Luigi
(86) International application number: PCT/CN2023/119912
(87) International publication number: WO 2025/025316

(56) References cited:
- WO-A1-2022/092598
- CN-A- 101 278 875
- CN-A- 102 452 405
- CN-A- 111 137 344
- CN-A- 116 729 457
- CN-Y- 201 432 709
- DE-U1- 202004 003 129
- GB-A- 2 488 324
- JP-A- 2015 081 066
- KR-U- 20130 000 273
- US-A- 5 857 695
- US-A1- 2003 234 517
- US-A1- 2004 232 660
- US-B1- 6 536 796
- US-B2- 7 201 385
- US-B2- 8 979 098

## Description

### Technical Field

The present invention belongs to the technical field of trolleys, more particularly relates to a multifunctional folding trolley.

### Background Art

A trolley is a hand truck pushed or pulled by manpower and can work in places where motor vehicles are inconvenient to use, and therefore, it is very convenient to transport lighter articles within a short distance.

For a folding trolley which is sold in the market and includes a bearing plate, casters and a push handle, the casters are disposed on a bottom surface of the bearing plate, the push handle is disposed on a top surface of the bearing plate, and the push handle is placed in parallel to and abuts the top surface of the bearing plate when being folded. For some of the folding trolleys, a push handle is higher than the top surface of the bearing plate when being placed in parallel, and for some of the folding trolley, a push handle is flush with the top surface of the bearing plate by disposing storage grooves in the bearing plate. For such folding trolleys, if an article such as a shopping basket is placed on the bearing plate while the push handle is in a folded state, the article such as the shopping basket needs to be taken down firstly when the push handle flips to be unfolded, which causes inconvenience to use.

For example, a Chinese utility model patent with publication number CN218055236U, entitled "Light-Weight Folding Trolley", includes a bottom plate and a push handle, wherein an upper surface of the bottom plate integrally extends upwards to be provided with a push handle connecting part, the push handle is connected to the push handle connecting part, a folding limiting mechanism for limiting the rotation of the push handle is disposed between the push handle and the push handle connecting part, the folding limiting mechanism includes a limiting rod and a tension spring, the limiting rod is slidably connected to the push handle connecting part and is switchable between a locking gear and an unlocking gear, the tension spring always provides a force for driving the limiting rod to slide to the locking gear, the bottom of the bottom plate integrally extends downwards to be provided with a front wheel connecting part, front wheels of the trolley are rotatably connected to the front wheel connecting part, and the bottom of the bottom plate is further provided with universal wheels. According to the above-mentioned disclosed technical solution, when the push handle is folded, the article such as the shopping basket cannot be well placed on the bottom plate, and even if the article such as the shopping basket can be placed on the bottom plate, they need to be taken down firstly when the push handle flips to be unfolded, which causes inconvenience to use. Document US5857695A discloses a beach cart. Document US7201385B2 discloses a multi-purpose cart assembly. Document KR20130000273U discloses a carrier handcart.

### Summary of the Invention

In order to solve the above-mentioned existing problems, an object of the present invention is to provide a multifunctional folding trolley according to the appended claims of which a push handle can be unfolded when an article such as a shopping basket is placed on a bearing plate.

The present invention is implemented by the technical solution as defined in the claims.

The present disclosure provides a multifunctional folding trolley, including a bearing part, a push-pull part, a caster part, and an unfolded positioning apparatus for limiting and positioning the push-pull part in an unfolded state, wherein the bearing part includes a bearing frame and a bearing plate which are connected with each other, the push-pull part includes a push-pull handle holder and a push-pull handle, the push-pull handle holder is pivotally connected to the bearing part by a pivot shaft and is provided with sliding channels, supporting rods of the push-pull handle are inserted in the sliding channels and are capable of sliding relative to the push-pull handle holder, the push-pull handle holder is provided with a first locking mechanism capable of locking and stopping the push-pull handle from sliding relative to the push-pull handle holder, the push-pull handle holder is disposed such that the push-pull handle is capable of being switched between a first position horizontal relative to the bearing part and a second position upright relative to the bearing part when the push-pull handle holder rotates relative to the bearing part, and the supporting rods is capable of slide along the sliding channels until reaching a space where the bearing part is lower than a top surface of the bearing plate when the push-pull handle is located on the first position horizontal relative to the bearing part.

In the above-mentioned technical solution, the push-pull handle is different from an existing push-pull handle in way of flipping to be unfolded relative to the bearing plate. When the push-pull handle in the present disclosure is unfolded from a folded state, firstly, the push-pull handle is pulled out of the first position in a horizontal direction by means of pulling until a bottom end of the push-pull handle is separated from the bearing part, and then, the push-pull handle flips, by means of rotating the push-pull handle holder, to the second position upright relative to the bearing plate. In a process that the push-pull handle is switched from the first position to the second position or from the second position to the first position, no matter whether an article is placed on the bearing plate, the unfolding and position switching of the push-pull handle cannot be affected. Moreover, when the push-pull handle holder rotates until the push-pull handle flips to the second position upright relative to the bearing plate, the unfolded positioning apparatus will lock the push-pull part to maintain the push-pull handle is in a state of being upright relative to the bearing plate, and therefore, the trolley is very convenient to use and is particularly suitable for use together with a shopping basket.

The caster part includes caster assemblies and caster connecting rods for connecting the two or more caster assemblies, the caster connecting rods are rotatably connected to the bearing frame, the caster assemblies include casters, caster frames and caster sleeves, the casters are rotatably mounted on the caster frames, the caster frames are fixed to the caster sleeves, and the caster sleeves are sleeved on the caster connecting rods and are fixed. In the present technical solution, the caster connecting rods are rotatably connected to the bearing frame, and the caster assemblies can rotate with the caster connecting rods and can switched from a parallel folded state and an upright moving state relative to the bearing part, which facilitates folding for storage of a trolley body and unfolding for use of the trolley body.

The caster connecting rods are rotatably connected to the bearing frame by connecting sleeves, the connecting sleeves are sleeved on the caster connecting rods, the caster connecting rods are capable of rotating relative to the connecting sleeves, the connecting sleeves include first connecting parts and second connecting parts, the first connecting parts are connected and fixed to the bearing frame, the second connecting parts are connected and fixed to the bearing plate, and the caster connecting rods are connected to the push-pull handle holder by linkage apparatuses. In this way, the caster part is firmly and reliably connected to the bearing part, and the push-pull handle holder can also be synchronously unfolded and folded by the linkage apparatuses, and it is fast and convenient to fold or unfold the caster part.

The unfolded positioning apparatus includes fixing rods, a button connecting rod, an operating button, locking seat connecting rods, locking seats, locking seat springs, and locking rails; two fixing rods are provided; the button connecting rod is disposed between the two fixing rods and is connected to the fixing rods; the operating button is fixed to the button connecting rod; the locking seat connecting rods are connected to the two fixing rods, and ends of the locking seat connecting rods extend to outer sides of the fixing rods; the locking seats are fixed to the ends of the locking seat connecting rods and are sleeved on the caster connecting rods; the locking rails are disposed on ends, close to the push-pull handle holder, of the fixing rods; notches matched with the locking rails are disposed in the push-pull handle holder and at positions corresponding to the locking rails; and the locking seat springs are sleeved on the caster connecting rods between the connecting sleeves and the locking seats to provide elastic forces for the locking rails into the to be snapped into notches. In the present technical solution, the locking seats are sleeved on the caster connecting rods, so that the overall unfolded positioning apparatus is slidably connected to the caster connecting rods; when the operating button is pressed, the overall unfolded positioning apparatus can slide relative to the caster connecting rods to ensure that the locking nails are separated from the notches, so that the push-pull handle holder and the unfolded positioning apparatus are unlocked; and after the force applied to the operating button is canceled, the overall unfolded positioning apparatus can reset under the action of the elastic forces of the locking seat springs, and the locking nails can be snapped into the notches to lock the push-pull handle holder.

Preferably, ends, facing the caster sleeves, of the locking seats are provided with inserting pins, ends, facing the locking seats, of the caster sleeves are provided with slots matched with the inserting pins, and the inserting pins are disposed to be snapped into the slots when the casters rotate to be unfolded to a position upright relative to the bearing part. In the present technical solution, the situation that the casters rotate to be unfolded to the position upright relative to the bearing part corresponds to a situation that the push-pull handle holder rotates until to the push-pull handle is on the second position upright relative to the bearing part, that is, the locking nails are snapped into the notches to lock the push-pull handle holder, and at the same time, the inserting pins are matched with the slots to lock the caster sleeves, so that the caster part cannot be folded relative to the bearing part, an upright moving state of the caster part relative to the bearing part and an upright unfolded state of the push-pull part relative to the bearing part can be better maintained.

Preferably, a front end of the bearing frame is provided with fixing seats connected and fixed to the bearing plate, the fixing seats include inner end surfaces and outer end surfaces, the pivot shaft is pivotally connected to the push-pull handle holder after passing through the fixing seats and the bearing frame from the outer end surfaces of the fixing seats, the push-pull handle holder is provided with metal locking plates at positions corresponding to the inner end surfaces of the fixing seats, the notches are disposed in the metal locking plates, and the notches are disposed to be matched and locked with the locking rails when the push-pull handle is located on the second position. In this way, the strength of connection between the bearing frame and the bearing plate can be enhanced; at the same time, it is convenient to be pivotally connected to the push-pull handle holder; and the notches are disposed in the metal locking plates, which can ensure the strength of the notches.

Preferably, the linkage apparatuses include first matching parts and second matching parts which are tooth pieces matched and meshed with each other, the tooth pieces of the first matching parts are disposed on the outer end surfaces of the fixing seats to allow the pivot shaft to pass through and are connected and fixed to the push-pull handle holder by two connecting nails disposed to be coaxial with the pivot shaft, and the tooth pieces of the second matching part are disposed on ends of the caster sleeves. In this way, when the push-pull handle holder rotates, the tooth pieces of the first matching parts connected and fixed to the push-pull handle holder can drive the tooth pieces of the second matching parts to drive the caster part to rotate, thereby realizing the synchronous unfolding and folding of the push-pull handle holder and the caster part.

Preferably, the push-pull handle holder is provided with rotating sleeves in the sliding channels, the rotating sleeves are rotatably connected, on positions deviated from centers of the rotating sleeves, to the push-pull handle holder by pins, and the supporting rods are inserted in the rotating sleeves and are capable of sliding relative to the rotating sleeves. In the present technical solution, after the push-pull handle slides to a completely unfolded position relative to the push-pull handle holder, rotation of the push-pull handle relative to the push-pull handle holder can be realized by means of the rotating sleeves, that is, the push-pull handle can swing between the first position and the second position so as to be switched to a draggable form.

Preferably, the first locking mechanism includes a first button, first locking pieces and a first spring, left and right ends of the first button are provided with driving pins, the first locking pieces are provided with guide sliding chutes matched with the driving pins and locking pins for locking the push-pull handle, two first locking pieces are provided and are respectively disposed on the left and right ends of the first button, when the first button is pressed, the driving pins are matched with the guide sliding chutes to ensure that the two first locking pieces are close to each other, the first spring is disposed on the bottom of the first button to provide an elastic force for resetting the first button, avoidance holes allowing the locking pins to pass through are disposed in of the rotating sleeves and at positions corresponding to the locking pins, the supporting rods are provided with first locking holes and second locking holes, the push-pull handle slides to a completely folded position relative to the push-pull handle holder when the first locking holes and the locking pins are matched and locked, and the push-pull handle slides to a completely unfolded position relative to the push-pull handle holder when the second locking holes and the locking pins are matched and locked. In this way, when the push-pull handle slides to the completely unfolded position relative to the push-pull handle holder, the locking pins are inserted in the avoidance holes and the second locking holes, such that the rotating sleeves are incapable of rotating relative to the push-pull handle holder, the push-pull handle is in the normal second position upright relative to the bearing plate. At the moment, the first button is pressed to ensure that the rotating sleeves are capable of rotating by taking the pins as rotating shafts after the locking pins are separated from the second locking holes and the avoidance holes, so that the push-pull handle can be rotated to be switched to a draggable form; and since the locking pins are not aligned to the avoidance holes and abuts against side walls of the rotating sleeves instead, the rotating sleeves are still capable of rotating even if the first button is released.

Preferably, a top surface edge of the bearing plate is provided with a surrounding edge higher than the top surface of the bearing plate, and sides of the bearing plate are provided with latch fasteners. In this way, it is convenient to place and fix the shopping basket.

The present disclosure has the following beneficial effects: no matter whether an article is placed on the bearing plate, the unfolding and position switch of the push-pull handle will not be affected; when the push-pull part is switched from the first position to the second position, the caster part can be synchronously switched from a folded state to an upright moving state, and thus, the trolley is fast and convenient to be unfolded as a whole; the unfolded positioning apparatus can lock the push-pull handle holder and the caster part at the same time, which brings good stability, and it can be ensured that the caster part cannot be folded unexpectedly during travelling; and since the push-pull handle are capable of rotating relative to the push-pull handle holder via the rotating sleeves, the push-pull handle can be switched to the dragging form, which brings better applicability.

### Brief Description of the Drawings

Fig. 1 is a schematic structural diagram showing a bottom direction of the present invention in which a lower cover plate is omitted;
Fig. 2 is a schematic structural diagram showing a bottom direction of the present invention;
Fig. 3 is a schematic structural diagram showing that a push-pull handle slides to a completely unfolded state when a bearing plate and a lower cover plate are omitted in the present invention;
Fig. 4 is a schematic structural diagram showing that a push-pull handle holder rotates from a first position to a second position when a bearing plate and a lower cover plate are omitted in the present invention;
Fig. 5 is a schematic structural diagram showing that a push-pull handle holder rotates to a second position when a bearing plate and a lower cover plate are omitted in the present invention;
Fig. 6 is a schematic structural diagram showing a push-pull handle holder in the present invention;
Fig. 7 is a schematic structural diagram showing a bearing part and a caster part in the present invention;
Fig. 8 is a schematic structural diagram showing a connecting sleeve in the present invention;
Fig. 9 is a schematic structural diagram showing an unfolded positioning apparatus in the present invention;
Fig. 10 is a schematic structural diagram showing a top direction of the present invention in which a bearing plate, a lower cover plate and a push-pull part are omitted;
Fig. 11 is a schematic partial structural diagram showing that locking seats and caster sleeves are matched and locked in the present invention;
Fig. 12 is a schematic structural diagram showing that a push-pull handle is completely folded when a bearing plate and a lower cover plate are omitted in the present invention;
Fig. 13 is a schematic partial enlarged diagram of part A in Fig. 12;
Fig. 14 is a schematic structural diagram showing a fixing seat in the present invention;
Fig. 15 is a schematic partial structural diagram showing that locking nails are matched with notches in the present invention;
Fig. 16 is a schematic structural diagram showing a push-pull part in the present invention;
Fig. 17 is a schematic partial sectional structural diagram of a push-pull handle holder and supporting rods in the present invention;
Fig. 18 is a schematic overall structural diagram showing that a push-pull handle is located on a second position in the present invention;
Fig. 19 is a schematic overall structural diagram showing that a push-pull handle is in a dragging form in the present invention;
Fig. 20 is a schematic overall structural diagram showing that a push-pull handle is located on a first position and including a shopping basket in the present invention; and
Fig. 21 is a schematic overall structural diagram showing that a push-pull handle is located on a second position and including a shopping basket in the present invention.

### Detailed Description of the Invention

The present invention will be further described below in conjunction with the accompanying drawings. The accompanying drawings are only for exemplary illustration, but cannot be understood as limitations on the present patent.

In order to more simply describe the present embodiments, some parts that are known by the skilled in the art, but are irrelevant to main contents of the present disclosure in the accompanying drawings or description will be omitted. In addition, in order to facilitate description, some parts in the accompanying drawings will be omitted, enlarged or shrunk, but do not represent the actual size or overall structure of a product.

### Embodiment 1

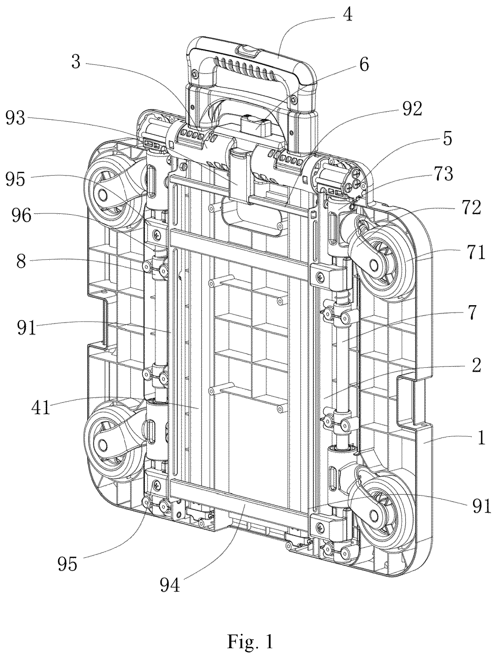

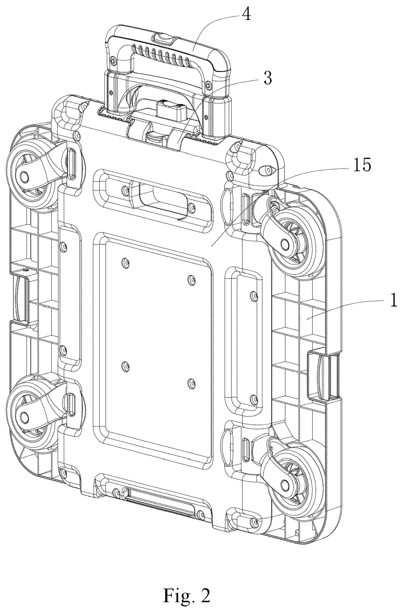

A multifunctional folding trolley in the present embodiment includes a bearing part, a push-pull part, a caster part, and an unfolded positioning apparatus 9 for limiting and positioning the push-pull part in an unfolded state. As shown in Fig. 1 and Fig. 2, the bearing part includes a bearing frame 2 and a bearing plate 1 which are connected with each other, a lower cover plate 15 is connected to the bottom of the bearing plate 1, and the lower cover plate 15 plays a role in packaging the bearing frame 2 and the unfolded positioning apparatus 9 and the like to enhance the connecting strength and dustproof effect of the overall product.

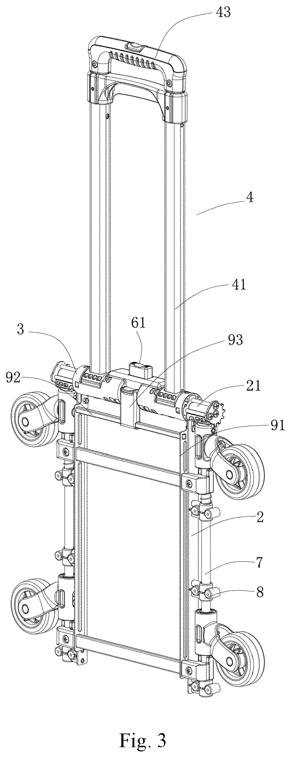

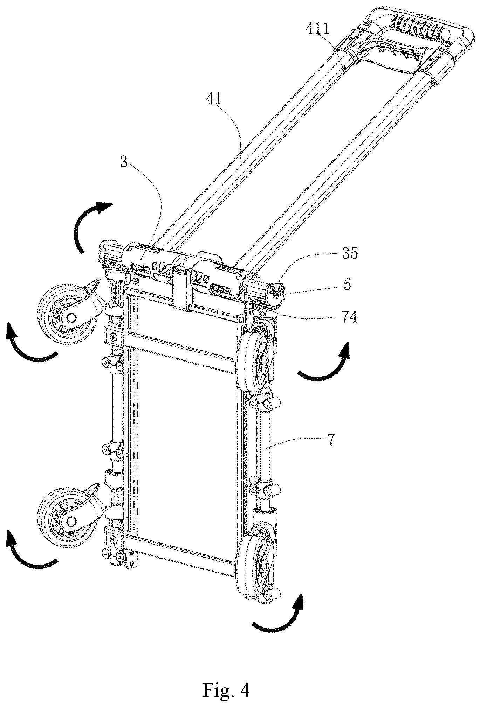

As shown in Fig. 1 to Fig. 6, the push-pull part includes a push-pull handle holder 3 and a push-pull handle 4, the push-pull handle holder 3 is pivotally connected to the bearing part by a pivot shaft 5 and is provided with sliding channels 31, and the push-pull handle 4 includes two supporting rods 41 disposed to be parallel and a cross rod 43 disposed on top ends of the supporting rods 41 to connect the two supporting rods 41 together. The supporting rods 41 of the push-pull handle 4 are inserted in the sliding channels 31 and are capable of sliding relative to the push-pull handle holder 3, the push-pull handle holder 3 is provided with a first locking mechanism 6 capable of locking and stopping of the push-pull handle 4 from sliding relative to the push-pull handle holder 3. The push-pull handle holder 3 is disposed such that the push-pull handle 4 is capable of being switched between a first position horizontal relative to the bearing part and a second position upright relative to the bearing part when the push-pull handle holder 3 rotates relative to the bearing part, and when the push-pull handle 4 is located on the first position horizontal relative to the bearing part, the supporting rods 41 is capable of sliding along the sliding channels 31 until reaching a space on the bottom of the bearing plate 1, i.e., a space defined by the bearing plate 1 and the lower cover plate 15, so as to be stored. When the push-pull handle 4 needs to be switched to the second position upright relative to the bearing part, firstly, the first locking mechanism 6 is operated to unlock the push-pull handle 4 and the push-pull handle holder 3, then, the push-pull handle 4 is horizontally pulled out from the first position until further pulling is disenabled when bottom ends of the supporting rods 41 abuts against the push-pull handle holder 3, then, the push-pull handle 4 and the push-pull handle holder 3 will be automatically locked by the first locking mechanism 6, finally, the push-pull handle holder 3 rotates for 90 degrees by taking the pivot shaft 5 as a rotating shaft, and then, the switching is completed.

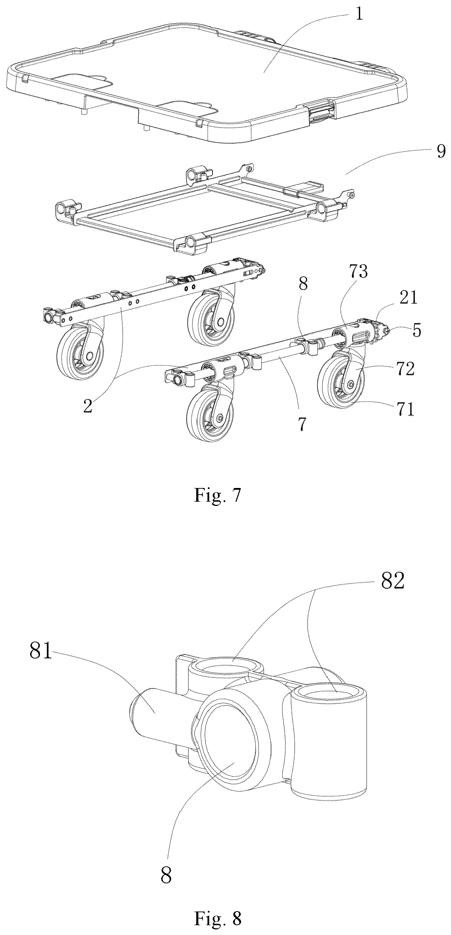

In the present embodiment, as shown in Fig. 7 and Fig. 8, the caster part includes caster assemblies and caster connecting rods 7 for connecting the two caster assemblies, wherein two caster connecting rods 7 are provided and are disposed to be spaced in parallel, and each of the caster connecting rods 7 is connected with two of the caster assemblies. The caster assemblies include casters 71, caster frames 72 and caster sleeves 73, the casters 71 are rotatably mounted on the caster frames 72, the caster frames 72 are fixed to the caster sleeves 73, the caster sleeves 73 are sleeved on the caster connecting rods 7 and fixed, the caster connecting rods 7 are rotatably connected to the bearing frame 2 by the connecting sleeves 8, the connecting sleeves 8 are sleeve on the caster connecting rods 7, the caster connecting rods 7 are capable of rotating relative to the connecting sleeves 8, the connecting sleeves 8 include first connecting parts 81 and second connecting parts 82, the first connecting parts 81 are connected and fixed to the bearing frame 2, and the second connecting parts 82 are connected and fixed to the bearing plate 1.

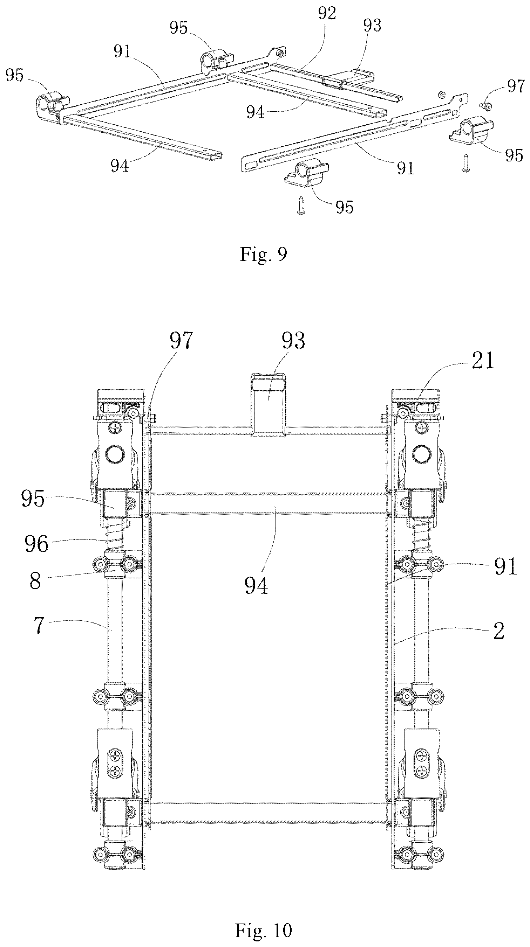

In the present embodiment, as shown in Fig. 7, Fig. 9 and Fig. 10, the unfolded positioning apparatus 9 includes fixing rods 91, a button connecting rod 92, an operating button 93, locking seat connecting rods 94, locking seats 95, locking seat springs 96, and locking rails 97; two fixing rods 91 are provided and are disposed to be spaced in parallel; the button connecting rod 92 is disposed between front ends of the two fixing rods 91 and is connected to the fixing rods 91; the operating button 93 is fixed to a middle position of the button connecting rod 92; and in order to facilitate operating the operating button 93, an avoidance space is remained in the push-pull handle holder 3 and at a position corresponding to the operating button 93. Two locking seat connecting rods 94 are provided, are respectively disposed on front and rear positions of the fixing rods 91, and are connected to the two fixing rods 91, and ends of the locking seat connecting rods 94 extend to outer sides of the fixing rods 91; four locking seats 95 are provided, are respectively fixed to the four ends of the two locking seat connecting rods 94, and are sleeve on the caster connecting rods 7; the locking rails 97 are disposed on front ends of the fixing rods 91, i.e., ends close to the push-pull handle holder 3; and notches 321 matched with the locking rails 97 are disposed in positions, corresponding to the locking rails 97, of the push-pull handle holder 3. As shown in Fig. 10, the locking seat springs 96 are sleeve on the caster connecting rods 7 between the connecting sleeves 8 and the locking seats 95 to provide elastic forces for the locking rails 97 to be snapped into the notches 321.

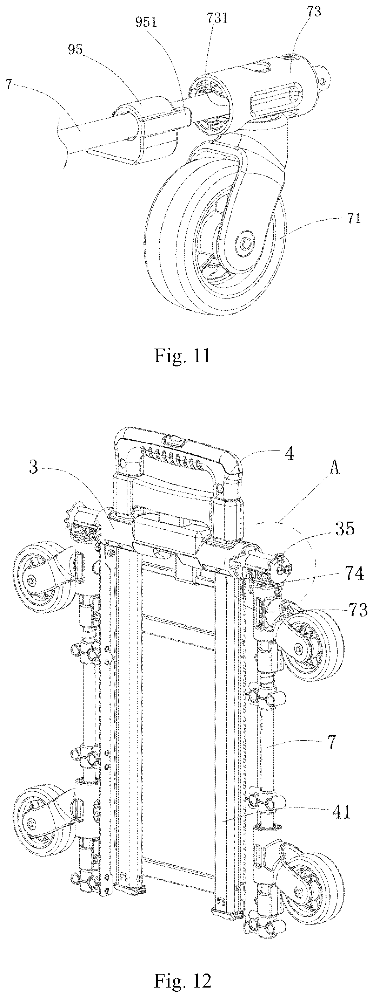

As a further improvement, as shown in Fig. 11, ends, facing the caster sleeves 73, of the locking seats 95 are integrally formed with inserting pins 951, ends, facing the locking seats 95, of the caster sleeves 73 are provided with slots 731 matched with the inserting pins 951, and the inserting pins 951 can be snapped into the slots 731 when the casters 71 rotate to be unfolded to a position upright relative to the bearing part.

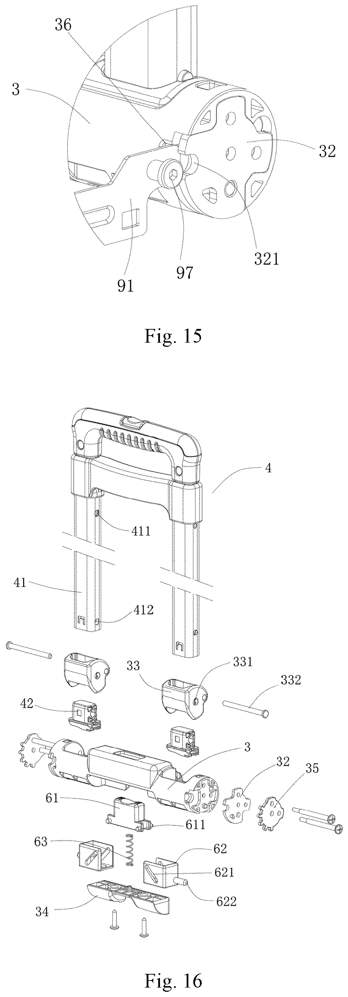

In the present embodiment, as shown in Fig. 12 and Fig. 15, a front end of the bearing frame 2 is provided with fixing seats 21, the fixing seats 21 are provided with upright connecting parts 213 and are connected and fixed to the bearing plate 1 and the lower cover plate 15 by screws passing through the upright connecting parts 213, and circular blind holes 214 allowing ends of the caster connecting rods 7 to be inserted are further formed in sides, facing the caster connecting rods 7, of the fixing seats 21 so as to axially limit the caster connecting rods 7. The fixing seats 21 include inner end surfaces 211 and outer end surfaces 212, the pivot shaft 5 is pivotally connected to the push-pull handle holder 3 after passing through the fixing seats 21 and the bearing frame 2 from the outer end surfaces 212 of the fixing seats 21. As shown in Fig. 15, the push-pull handle holder 3 is provided with metal locking plates 32 are positions corresponding to the inner end surfaces 211 of the fixing seats 21, the notches 321 are disposed in the metal locking plates 32, and the notches 321 are disposed to be matched and locked with the locking rails 97 when the push-pull handle holder 3 rotates until the push-pull handle 4 is located on the second position and is upright relative to the bearing part. Avoidance slots 36 allowing ends of the fixing rods 91 to be inserted are disposed in the push-pull handle holder 3 on sides of the metal locking plates 32.

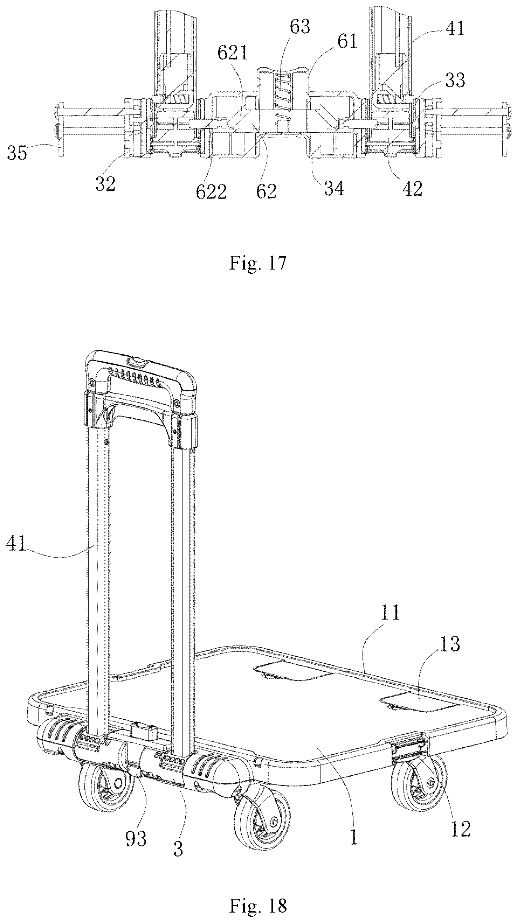

In the present embodiment, as shown in Fig. 16 and Fig. 17, the first locking mechanism 6 includes a first button 61, first locking pieces 62 and a first spring 63, the first button 61 is disposed in the push-pull handle holder 3, the top of the first button 61 extends out of the top of the push-pull handle holder 3, left and right ends of the first button 61 are provided with driving pins 611, and the first locking pieces 62 are provided with guide sliding chutes 621 matched with the driving pins 611 and obliquely disposed and locking pins 622 for locking the push-pull handle 4. Two first locking pieces 62 are provided and are respectively disposed on the left and right ends of the first button 61, the guide sliding chutes 621 of the two first locking pieces 62 form a splayed-like layout, when the first button 61 is pressed, the driving pins 611 are matched with the guide sliding chutes 621 to ensure that the two first locking pieces 62 are close to each other so that the locking pins 622 are separated from the supporting rods 41, the first spring 63 is disposed on the bottom of the first button 61 to provide an elastic force for resetting the first button 61; and specifically, a sealing plate 34 is disposed on the bottom of the push-pull handle holder 3, the top of the first spring 63 abuts against the bottom of the first button 61, and the bottom of the first spring 63 abuts against the sealing plate 34. First locking holes 411 and second locking holes 412 are respectively disposed in inner sides of upper and lower parts of the supporting rods 41, limiting stoppers 42 are embedded in bottoms of the supporting rods 41, inserting holes allowing the locking pins 622 to be inserted are disposed in inner side surfaces of the limiting stoppers 42 and at positions corresponding to the second locking holes 412, the limiting stoppers 42 are disposed to be incapable of passing through the sliding channels 31 to prevent the push-pull handle 4 from being separated from the push-pull handle holder 3. The first locking holes 411 and the locking pins 622 are matched and locked when the push-pull handle 4 slides to be completely folded relative to the push-pull handle holder 3, and the second locking holes 412 and the locking pins 622 are matched and locked when the push-pull handle 4 slides to be completely unfolded relative to the push-pull handle holder 3.

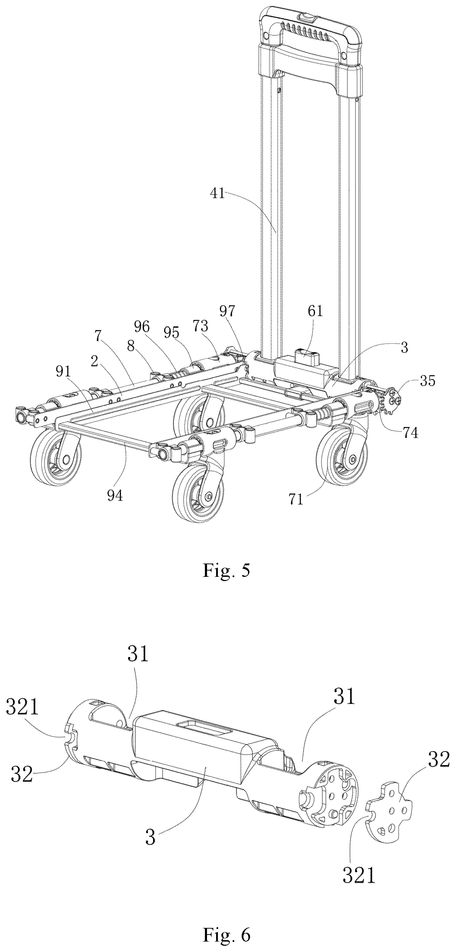

In the present embodiment, as shown in Fig. 5, firstly, the caster part is manually unfolded to an upright moving position, then, the first locking mechanism 6 is operated to unlock the push-pull handle 4 and the push-pull handle holder 3, the push-pull handle 4 is horizontally pulled from of the first position until further pulling is disenabled when bottom ends of the supporting rods 41 abut against the push-pull handle holder 3, then, the push-pull handle 4 and the push-pull handle holder 3 will be automatically locked by the first locking mechanism 6, finally, the push-pull handle holder 3 rotates for 90 degrees by taking the pivot shaft 5 as a rotating shaft, and then, the switching can be completed. At the moment, under the action of elastic forces of the locking seat springs 96 of the unfolded positioning apparatus 9, the locking nails 97 will be automatically snapped into the notches 321 of the push-pull handle holder 3, the inserting pins 951 of the locking seats 95 are also inserted into the slots 731 of the caster sleeves 73 at the same time, and thus, the push-pull handle holder 3 and the caster part are locked. When unlocking is needed, the locking nails 97 can be driven to be separated from the notches 321 by pressing the operating button 93, the inserting pins 951 are also separated from the slots 731 at the same time, and thus, unlocking is realized.

### Embodiment 2

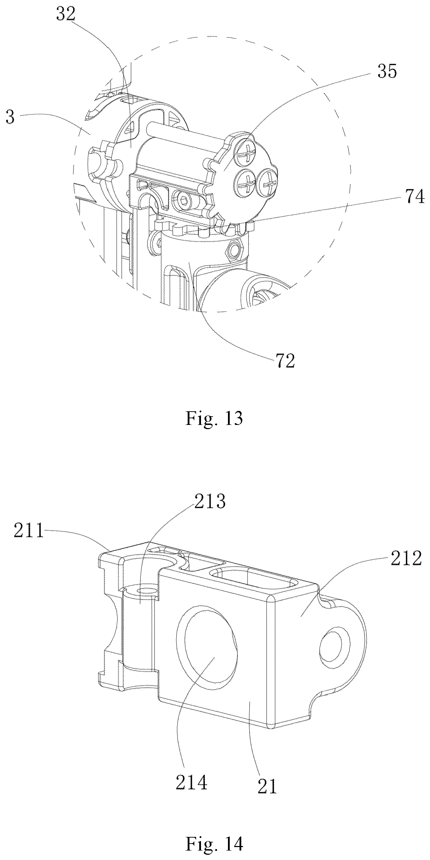

The present embodiment is similar to embodiment 1 in structure except that as shown in Fig. 12, Fig. 13, Fig. 16, and Fig. 17, in the present embodiment, the caster connecting rods 7 are connected to the push-pull handle holder 3 by linkage apparatuses. The linkage apparatuses include first matching parts and second matching parts which are tooth pieces 35, 74 matched and meshed with each other; the tooth pieces 35 of the first matching parts are disposed on the outer end surfaces 212 of the fixing seats 21 to allow the pivot shaft 5 to pass through and are connected and fixed to the push-pull handle holder 3 by two connecting nails disposed to be coaxial with the pivot shaft 5. In this way, the tooth pieces 35 of the first matching parts will synchronously rotate with the push-pull handle holder 3; and the tooth pieces 74 of the second matching part are disposed on ends of the caster sleeves 73 and are fixed to the caster sleeves 73.

In this way, when the push-pull handle holder 3 rotates, the tooth pieces 35 of the first matching parts connected and fixed to the push-pull handle holder 3 can drive the tooth pieces 74 of the second matching part to drive the caster part to rotate, so that the caster part of the push-pull handle holder 3 is unfolded and folded synchronously.

### Embodiment 3

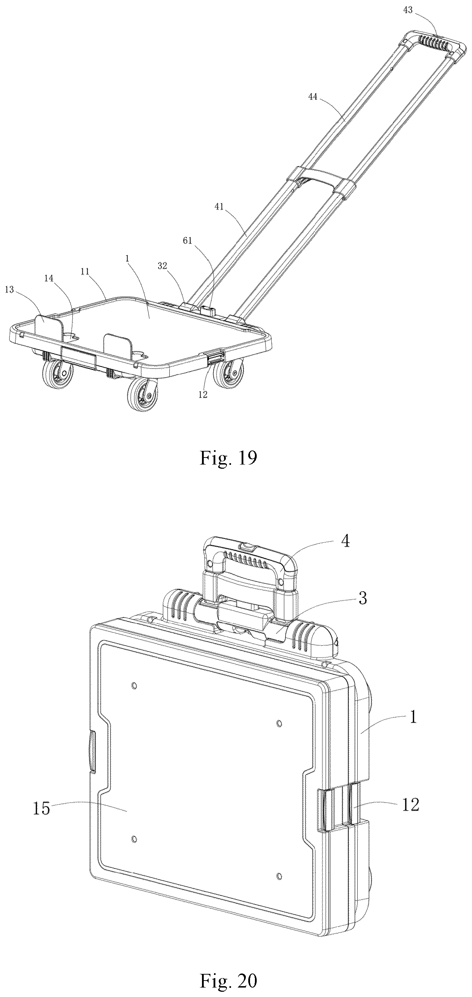

The present embodiment is similar to embodiment 2 in structure except that as shown in Fig. 16 and Fig. 19, in the present embodiment, the push-pull handle holder 3 is provided with rotating sleeves 33 in the sliding channels 31, the rotating sleeves 33 are rotatably connected, on positions deviated from centers of rotating sleeves 33, to the push-pull handle holder 3 by pins 332, the supporting rods 41 are inserted in the rotating sleeves 33 and are capable of sliding relative to the rotating sleeves 33, and avoidance holes 331 allowing the locking pins 622 to pass through are disposed in the rotating sleeves 33 and at positions corresponding to the locking pins 622. In this way, when the push-pull handle 4 slides to a completely unfolded position relative to the push-pull handle holder 3, the locking pins 622 are inserted in the avoidance holes 331 and the second locking holes 412 such that the rotating sleeves 33 are incapable of rotating relative to the push-pull handle holder 3, and the push-pull handle 4 is in the normal second position upright relative to the bearing plate 1. At the moment, the first button 61 is pressed to ensure that the rotating sleeves 33 are capable of rotating by taking the pins 332 as rotating shafts after the locking pins 622 are separated from the second locking holes 412 and the avoidance holes 331, so that the push-pull handle 4 can be rotated to be switched to a draggable form; and since the locking pins 622 are not aligned to the avoidance holes 331, but abut against side walls of the rotating sleeves 33, the rotating sleeves 33 are still capable of rotating even if the first button 61 is released.

In order to ensure that the push-pull handle can adapt to people with various body heights and provide comfortable experience, extension rods 44 telescopic relative to the supporting rods 41 are further embedded in the supporting rods 41, and a cross rod 43 is disposed on top ends of the extension rods 44 to connect the two extension rods 44 together.

### Embodiment 4

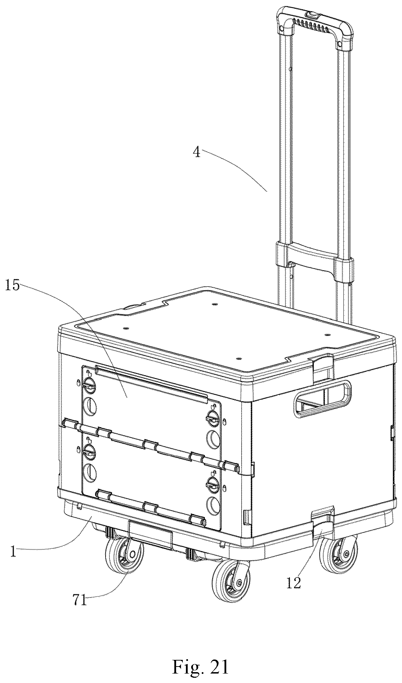

The present embodiment is similar to embodiment 3 in structure except that as shown in Fig. 18 and Fig. 21, in the present embodiment, a top surface edge of the bearing plate 1 is provided with a surrounding edge 11 higher than the top surface of the bearing plate 1, and sides of the bearing plate 1 are provided with latch fasteners 12 for fixing a shopping basket 16, an end, away from the push-pull handle 4, of the top surface of the bearing plate 1 is provided with storage grooves 14 in which baffles 13 are hinged, the baffles 13 can flip to be horizontally stored in the storage grooves 14 or flip to be unfolded to be perpendicular relative to the bearing plate 1, and when goods are placed on the bearing plate 1, the baffles 13 can be unfolded to block the goods so as to play a certain fixing role.

The shopping basket 16 is placed on the top surface of the bearing plate 1, a boss disposed on the bottom thereof will be embedded in the top surface of the bearing plate 1 defined by the surrounding edge 11, and therefore, slip of the shopping basket due to vibration in a process that the trolley advances will be avoided. In addition, the sides of the bearing plate 1 are provided with the latch fasteners 12 to further fix the shopping basket 16. When being empty to be folded, the shopping basket 16 can be well fixed together with the bearing plate 1 without falling off and is convenient for carrying as a whole. Moreover, when the trolley needs to be unfolded, the shopping basket 16 will not affect the unfolding of the push-pull part and the caster part.

## Claims

1. A multifunctional folding trolley, comprising a bearing part, a push-pull part, a caster part, and an unfolded positioning apparatus (9) for limiting and positioning the push-pull part in an unfolded state, wherein the bearing part comprises a bearing frame (2) and a bearing plate (1) which are connected with each other, the push-pull part comprises a push-pull handle holder (3) and a push-pull handle (4), the push-pull handle holder (3) is pivotally connected to the bearing part by a pivot shaft (5) and is provided with sliding channels (31), supporting rods (41) of the push-pull handle (4) are inserted in the sliding channels (31) and are capable of sliding relative to the push-pull handle holder (3), the push-pull handle holder (3) is provided with a first locking mechanism (6) capable of locking and stopping the push-pull handle (4) from sliding relative to the push-pull handle holder (3), the push-pull handle holder (3) is disposed such that the push-pull handle (4) is capable of being switched between a first position horizontal relative to the bearing part and a second position upright relative to the bearing part when the push-pull handle holder (3) rotates relative to the bearing part, and the supporting rods (41) is capable of sliding along the sliding channels (31) until reaching a space where the bearing part is lower than a top surface of the bearing plate (1) when the push-pull handle (4) is located on the first position horizontal relative to the bearing part,
**characterized in that** the caster part comprises caster assemblies and caster connecting rods (7) for connecting the two or more caster assemblies, the caster connecting rods (7) are rotatably connected to the bearing frame (2), the caster assemblies comprise casters (71), caster frames (72) and caster sleeves (73), the casters (71) are rotatably mounted on the caster frames (72), the caster frames (72) are fixed to the caster sleeves (73), and the caster sleeves (73) are sleeved on the caster connecting rods (7) and are fixed,
wherein the caster connecting rods (7) are rotatably connected to the bearing frame (2) by connecting sleeves (8), the connecting sleeves (8) are sleeved on the caster connecting rods (7), the caster connecting rods (7) are capable of rotating relative to the connecting sleeves (8), the connecting sleeves (8) comprise first connecting parts (81) and second connecting parts (82), the first connecting parts (81) are connected and fixed to the bearing frame (2), the second connecting parts (82) are connected and fixed to the bearing plate (1), and the caster connecting rods (7) are connected to the push-pull handle holder (3) by linkage apparatuses, and
wherein the unfolded positioning apparatus (9) comprises fixing rods (91), a button connecting rod (92), an operating button (93), locking seat connecting rods (94), locking seats (95), locking seat springs (96), and locking rails (97); two fixing rods (91) are provided; the button connecting rod (92) is disposed between the two fixing rods (91) and is connected to the fixing rods (91); the operating button (93) is fixed to the button connecting rod (92); the locking seat connecting rods (94) are connected to the two fixing rods (91), and ends of the locking seat connecting rods (94) extend to outer sides of the fixing rods (91); the locking seats (95) are fixed to the ends of the locking seat connecting rods (94) and are sleeved the caster connecting rods (7); the locking rails (97) are disposed on ends, close to the push-pull handle holder (3), of the fixing rods (91); notches (321) matched with the locking rails (97) are disposed in the push-pull handle holder (3) and at positions corresponding to the locking rails (97); and the locking seat springs (96) are sleeved on the caster connecting rods (7) between the connecting sleeves (8) and the locking seats (95) to provide elastic forces for the locking rails (97) to be snapped into the notches (321).

2. The multifunctional folding trolley of claim 1, wherein ends, facing the caster sleeves (73), of the locking seats (95) are provided with inserting pins (951), ends, facing the locking seats (95), of the caster sleeves (73) are provided with slots (731) matched with the inserting pins (951), and the inserting pins (951) are disposed to be snapped into the slots (731) when the casters (71) rotate to be unfolded to a position upright relative to the bearing part.

3. The multifunctional folding trolley of claim 2, wherein a front end of the bearing frame (2) is provided with fixing seats (21) connected and fixed to the bearing plate (1), the fixing seats (21) comprise inner end surfaces (211) and outer end surfaces (212), the pivot shaft (5) is pivotally connected to the push-pull handle holder (3) after passing through the fixing seats (21) and the bearing frame (2) from the outer end surfaces (212) of the fixing seats (21), the push-pull handle holder (3) is provided with metal locking plates (32) at positions corresponding to the inner end surfaces (211) of the fixing seats (21), the notches (321) are disposed in the metal locking plates (32), and the notches (321) are disposed to be matched and locked with the locking rails (97) when the push-pull handle (4) is located on the second position.

4. The multifunctional folding trolley of claim 3, wherein the linkage apparatuses comprise first matching parts and second matching parts which are tooth pieces (35, 74) matched and meshed with each other, the tooth pieces (35) of the first matching parts are disposed on the outer end surfaces (212) of the fixing seats (21) to allow the pivot shaft (5) to pass through and are connected and fixed to the push-pull handle holder (3) by two connecting nails disposed to be coaxial with the pivot shaft (5), and the tooth pieces (74) of the second matching part are disposed on ends of the caster sleeves (73).

5. The multifunctional folding trolley of any one of claims 1 to 4, wherein the push-pull handle holder (3) is provided with rotating sleeves (33) in the sliding channels (31), the rotating sleeves (33) are rotatably connected, on positions deviated from centers of the rotating sleeves (33) , to the push-pull handle holder (3) by pins (332), and the supporting rods (41) are inserted in the rotating sleeves (33) and are capable of sliding relative to the rotating sleeves (33).

6. The multifunctional folding trolley of claim 5, wherein the first locking mechanism (6) comprises a first button (61), first locking pieces (62) and a first spring (63), left and right ends of the first button (61) are provided with driving pins (611), the first locking pieces (62) are provided with guide sliding chutes (621) matched with the driving pins (611) and locking pins (622) for locking the push-pull handle (4), two first locking pieces (62) are provided and are respectively disposed on the left and right ends of the first button (61), when the first button (61) is pressed, the driving pins (611) are matched with the guide sliding chutes (621) to ensure that the two first locking pieces (62) are close to each other, the first spring (63) is disposed on the bottom of the first button (61) to provide an elastic force for resetting the first button (61), avoidance holes (331) allowing the locking pins (622) to pass through are disposed in the rotating sleeves (33) and at positions corresponding to the locking pins (622), the supporting rods (41) are provided with first locking holes (411) and second locking holes (412), the push-pull handle (4) slides to a completely folded position relative to the push-pull handle holder (3) when the first locking holes (411) and the locking pins (622) are matched and locked, and the push-pull handle (4) slides to a completely unfolded position relative to the push-pull handle holder (3)when the second locking holes (412) and the locking pins (622) are matched and locked.

7. The multifunctional folding trolley of claim 1, wherein a top surface edge of the bearing plate (1) is provided with a surrounding edge (11) higher than the top surface of the bearing plate (1), and sides of the bearing plate (1) are provided with latch fasteners (12).

## Patentansprüche

1. Zusammenklappbarer Multifunktionshandwagen, umfassend einen tragenden Teil, einen Zug- und Druckteil, einen Rollenteil und eine ungefaltete Positioniervorrichtung (9) zum Begrenzen und Positionieren des Zug- und Druckteils in einem ungefalteten Zustand, worin der tragende Teil einen tragenden Rahmen (2) und eine tragende Platte (1) umfasst, die miteinander verbunden sind, der Zug- und Druckteil einen Zug- und Druck-Handgriffhalter (3) und einen Zug- und Druck-Handgriff (4) umfasst, der Zug- und Druck-Handgriffhalter (3) mit dem tragenden Teil durch eine Schwenkwelle (5) schwenkbar verbunden ist und mit Gleitkanälen (31) versehen ist, Stützstangen (41) des Zug- und Druck-Handgriffs (4) in die Gleitkanäle (31) eingefügt sind und dazu fähig sind, relativ zum Zug- und Druck-Handgriffhalter (3) zu gleiten, der Zug- und Druck-Handgriffhalter (3) mit einem ersten Verriegelungsmechanismus (6) versehen ist, der dazu fähig ist, den Zug- und Druck-Handgriff (4) zu verriegeln und daran zu hindern, relativ zum Zug- und Druck-Handgriffhalter (3) zu gleiten, der Zug- und Druck-Handgriffhalter (3) derart angeordnet ist, dass der Zug- und Druck-Handgriff (4) dazu fähig ist, zwischen einer ersten Stellung, die horizontal relativ zum tragenden Teil ist, und einer zweiten Stellung, die aufrecht relativ zum tragenden Teil ist, gewechselt zu werden, wenn der Zug- und Druck-Handgriffhalter (3) sich relativ zum tragenden Teil dreht, und die Stützstangen (41) dazu fähig sind, entlang den Gleitkanälen (31) zu gleiten, bis sie einen Raum erreichen, wo der tragende Teil niedriger ist als eine obere Fläche der tragenden Platte (1), wenn der Zug- und Druck-Handgriff (4) an der ersten Stellung gelegen ist, die horizontal relativ zum tragenden Teil ist,
**dadurch gekennzeichnet, dass** der Rollenteil Rollenanordnungen und Rollenverbindungsstangen (7) zum Verbinden der zwei oder mehreren Rollenanordnungen umfasst, die Rollenverbindungsstangen (7) mit dem tragenden Rahmen (2) drehbar verbunden sind, die Rollenanordnungen Rollen (71), Rollenrahmen (72) und Rollenhülsen (73) umfassen, die Rollen (71) an den Rollenrahmen (72) drehbar montiert sind, die Rollenrahmen (72) an den Rollenhülsen (73) befestigt sind, und die Rollenhülsen (73) auf die Rollenverbindungsstangen (7) gesteckt sind und befestigt sind, worin die Rollenverbindungsstangen (7) mit dem tragenden Rahmen (2) durch Verbindungshülsen (8) drehbar verbunden sind, die Verbindungshülsen (8) auf die Rollenverbindungsstangen (7) gesteckt sind, die Rollenverbindungsstangen (7) dazu fähig sind, sich relativ zu den Verbindungshülsen (8) zu drehen, die Verbindungshülsen (8) erste Verbindungsteile (81) und zweite Verbindungsteile (82) umfassen, die ersten Verbindungsteile (81) mit dem tragenden Rahmen (2) verbunden und daran befestigt sind, die zweiten Verbindungsteile (82) mit der tragenden Platte (1) verbunden und daran befestigt sind, und die Rollenverbindungsstangen (7) mit dem Zug- und Druck-Handgriffhalter (3) durch Gestängevorrichtungen verbunden sind, und
worin die ungefaltete Positioniervorrichtung (9) Befestigungsstangen (91), eine Knopfverbindungsstange (92), einen Bedienungsknopf (93), Verriegelungssitzverbindungsstangen (94), Verriegelungssitze (95), Verriegelungssitzfedern (96) und Verriegelungsschienen (97) umfasst; zwei Befestigungsstangen (91) vorgesehen sind; die Knopfverbindungsstange (92) zwischen den zwei Befestigungsstangen (91) angeordnet ist und mit den Befestigungsstangen (91) verbunden ist; der Bedienungsknopf (93) mit der Knopfverbindungsstange (92) befestigt ist; die Verriegelungssitzverbindungsstangen (94) mit den zwei Befestigungsstangen (91) verbunden sind, und Enden der Verriegelungssitzverbindungsstangen (94) sich zu äußeren Seiten der Befestigungsstangen (91) erstrecken; die Verriegelungssitze (95) an den Enden der Verriegelungssitzverbindungsstangen (94) befestigt sind und auf die Rollenverbindungsstangen (7) gesteckt sind; die Verriegelungsschienen (97) an Enden, die dem Zug- und Druck-Handgriffhalter (3) nahe sind, der Befestigungsstangen (91) angeordnet sind; Aussparungen (321), die an die Verriegelungsschienen (97) angepasst sind, im Zug- und Druck-Handgriffhalter (3) und an Stellungen angeordnet sind, die den Verriegelungsschienen (97) entsprechen; und die Verriegelungssitzfedern (96) auf die Rollenverbindungsstangen (7) zwischen den Verbindungshülsen (8) und den Verriegelungssitzen (95) gesteckt sind, um den Verriegelungsschienen (97) Federkräfte bereitzustellen, damit sie in die Aussparungen (321) eingeschnappt werden.

2. Zusammenklappbarer Multifunktionshandwagen nach Anspruch 1, worin Enden, die den Rollenhülsen (73) zugewandt sind, der Verriegelungssitze (95) mit Einfügungsstiften (951) versehen sind, Enden, die den Verriegelungssitzen (95) zugewandt sind, der Rollenhülsen (73) mit Schlitzen (731) versehen sind, die an die Einfügungsstifte (951) angepasst sind, und die Einfügungsstifte (951) so angeordnet sind, um in die Schlitze (731) eingeschnappt zu werden, wenn die Rollen (71) sich drehen, um zu einer Stellung ungefaltet zu werden, die aufrecht relativ zum tragenden Teil ist.

3. Zusammenklappbarer Multifunktionshandwagen nach Anspruch 2, worin ein vorderes Ende des tragenden Rahmens (2) mit Befestigungssitzen (21) versehen ist, die mit der tragenden Platte (1) verbunden sind und daran befestigt sind, die Befestigungssitze (21) innere Endflächen (211) und äußere Endflächen (212) umfassen, die Schwenkwelle (5) mit dem Zug- und Druck-Handgriffhalter (3) schwenkbar verbunden ist, nachdem sie durch die Befestigungssitze (21) und den tragenden Rahmen (2) von den äußeren Endflächen (212) der Befestigungssitze (21) durchgelaufen ist, der Zug- und Druck-Handgriffhalter (3) mit Metallverriegelungsplatten (32) an Stellungen versehen ist, die den inneren Endflächen (211) der Befestigungssitze (21) entsprechen, die Aussparungen (321) in den Metallverriegelungsplatten (32) angeordnet sind, und die Aussparungen (321) so angeordnet sind, um an die Verriegelungsschienen (97) angepasst zu werden und mit ihnen verriegelt zu werden, wenn der Zug- und Druck-Handgriff (4) an der zweiten Stellung gelegen ist.

4. Zusammenklappbarer Multifunktionshandwagen nach Anspruch 3, worin die Gestängevorrichtungen erste passende Teile und zweite passende Teile umfassen, die Zahnstücke (35, 74) sind, die aneinander angepasst sind und ineinander greifen, die Zahnstücke (35) der ersten passenden Teile an den äußeren Endflächen (212) der Befestigungssitze (21) angeordnet sind, um der Schwenkwelle (5) zu ermöglichen, durchzulaufen, und mit dem Zug- und Druck-Handgriffhalter (3) durch zwei Verbindungsnägel verbunden sind und daran befestigt sind, die so angeordnet sind, um zu der Schwenkwelle (5) koaxial zu sein, und die Zahnstücke (74) des zweiten passenden Teils an Enden der Rollenhülsen (73) angeordnet sind.

5. Zusammenklappbarer Multifunktionshandwagen nach einem der Ansprüche 1 bis 4, worin der Zug- und Druck-Handgriffhalter (3) mit Drehhülsen (33) in den Gleitkanälen (31) versehen ist, die Drehhülsen (33), an Stellungen, die von Zentren der Drehhülsen (33) abweichen, mit dem Zug- und Druck-Handgriffhalter (3) durch Stifte (332) drehbar verbunden sind, und die Stützstangen (41) in die Drehhülsen (33) eingefügt sind und dazu fähig sind, relativ zu den Drehhülsen (33) zu gleiten.

6. Zusammenklappbarer Multifunktionshandwagen nach Anspruch 5, worin der erste Verriegelungsmechanismus (6) einen ersten Knopf (61), erste Verriegelungsstücke (62) und eine erste Feder (63) umfasst, linke und rechte Enden des ersten Knopfes (61) mit Mitnehmerstiften (611) versehen sind, die ersten Verriegelungsstücke (62) mit Führungsgleitrutschen (621) versehen sind, die an die Mitnehmerstifte (611) und Verriegelungsstifte (622) zur Verriegelung des Zug- und Druck-Handgriffs (4) angepasst sind, zwei erste Verriegelungsstücke (62) an den linken und rechten Enden des ersten Knopfes (61) vorgesehen sind und jeweils angeordnet sind, wenn der erste Knopf (61) gedrückt ist, die Mitnehmerstifte (611) an die Führungsgleitrutschen (621) angepasst sind, um sicherzustellen, dass die zwei ersten Verriegelungsstücke (62) einander nahe sind, die erste Feder (63) am Boden des ersten Knopfes (61) angeordnet ist, um eine Federkraft zum Rücksetzen des ersten Knopfes (61) bereitzustellen, Vermeidungslöcher (331), die den Verriegelungsstiften (622) ermöglichen, dadurch zu laufen, in den Drehhülsen (33) und an Stellungen angeordnet sind, die den Verriegelungsstiften (622) entsprechen, die Stützstangen (41) mit ersten Verriegelungslöchern (411) und zweiten Verriegelungslöchern (412) versehen sind, der Zug- und Druck-Handgriff (4) zu einer völlig gefalteten Stellung relativ zum Zug- und Druck-Handgriffhalter (3) gleitet, wenn die ersten Verriegelungslöcher (411) und die Verriegelungsstifte (622) angepasst sind und verriegelt sind, und der Zug- und Druck-Handgriff (4) zu einer völlig ungefalteten Stellung relativ zum Zug- und Druck-Handgriffhalter (3) gleitet, wenn die zweiten Verriegelungslöcher (412) und die Verriegelungsstifte (622) angepasst sind und verriegelt sind.

7. Zusammenklappbarer Multifunktionshandwagen nach Anspruch 1, worin eine obere Flächenkante der tragenden Platte (1) mit einer umlaufenden Kante (11) versehen ist, die höher ist als die obere Fläche der tragenden Platte (1), und Seiten der tragenden Platte (1) mit Schnappverschlüssen (12) versehen sind.

## Revendications

1. Chariot pliable multifonctionnel, comprenant une partie porteuse, une partie de poussée-traction, une partie de roulette et un appareil de positionnement déplié (9) pour limiter et positionner la partie de poussée-traction dans un état déplié, dans lequel la partie porteuse comprend un cadre porteur (2) et une plaque porteuse (1) qui sont reliés l'un à l'autre, la partie de poussée-traction comprend un élément de maintien de poignée de poussée-traction (3) et une poignée de poussée-traction (4), l'élément de maintien de poignée de poussée-traction (3) est relié de manière pivotante à la partie porteuse par un arbre de pivot (5) et est pourvu de canaux de coulissement (31), des tiges de support (41) de la poignée de poussée-traction (4) sont insérées dans les canaux de coulissement (31) et sont capables de coulisser par rapport à l'élément de maintien de poignée de poussée-traction (3), l'élément de maintien de poignée de poussée-traction (3) est pourvu d'un premier mécanisme de verrouillage (6) capable de verrouiller la poignée de poussée-traction (4) et de l'empêcher de coulisser par rapport à l'élément de maintien de poignée de poussée-traction (3), l'élément de maintien de poignée de poussée-traction (3) est disposé de sorte que la poignée de poussée-traction (4) est capable de basculer entre une première position horizontale par rapport à la partie porteuse et une seconde position verticale par rapport à la partie porteuse lorsque l'élément de maintien de poignée de poussée-traction (3) tourne par rapport à la partie porteuse, et les tiges de support (41) sont capables de coulisser le long des canaux de coulissement (31) jusqu'à atteindre un espace où la partie porteuse est plus basse qu'une surface supérieure de la plaque porteuse (1) lorsque la poignée de poussée-traction (4) est située sur la première position horizontale par rapport à la partie porteuse,
**caractérisé en ce que** la partie de roulette comprend des ensembles de roulette et des bielles de roulettes (7) pour relier les deux ou plusieurs ensembles de roulette, les bielles de roulettes (7) sont reliées de manière rotative au cadre porteur (2), les ensembles de roulette comprennent des roulettes (71), des cadres de roulette (72) et des manchons de roulette (73), les roulettes (71) sont montées de manière rotative sur les cadres de roulette (72), les cadres de roulette (72) sont fixés aux manchons de roulette (73), et les manchons de roulette (73) sont emmanchés sur les bielles de roulettes (7) et sont fixes,
dans lequel les bielles de roulettes (7) sont reliées de manière rotative au cadre porteur (2) par des manchons de liaison (8), les manchons de liaison (8) sont emmanchés sur les bielles de roulettes (7), les bielles de roulettes (7) sont capables de tourner par rapport aux manchons de liaison (8), les manchons de liaison (8) comprennent de premières parties de liaison (81) et de secondes parties de liaison (82), les premières parties de liaison (81) sont reliées et fixées au cadre porteur (2), les secondes parties de liaison (82) sont reliées et fixées à la plaque porteuse (1), et les bielles de roulettes (7) sont reliées à l'élément de maintien de poignée de poussée-traction (3) par des appareils de liaison, et
dans lequel l'appareil de positionnement déplié (9) comprend des tiges de fixation (91), une bielle de bouton (92), un bouton de commande (93), des bielles de siège de verrouillage (94), des sièges de verrouillage (95), des ressorts de siège de verrouillage (96) et des rails de verrouillage (97) ; deux tiges de fixation (91) sont prévues ; la bielle de bouton (92) est disposée entre les deux tiges de fixation (91) et est reliée aux tiges de fixation (91) ; le bouton de commande (93) est fixé à la bielle de bouton (92) ; les bielles de siège de verrouillage (94) sont reliées aux deux tiges de fixation (91), et des extrémités des bielles de siège de verrouillage (94) s'étendent vers les côtés extérieurs des tiges de fixation (91) ; les sièges de verrouillage (95) sont fixés aux extrémités des bielles de siège de verrouillage (94) et sont emmanchés sur les bielles de roulette (7) ; les rails de verrouillage (97) sont disposés sur des extrémités, à proximité de et l'élément de maintien de poignée de poussée-traction (3), des tiges de fixation (91) ; des encoches (321) adaptées aux rails de verrouillage (97) sont disposées dans l'élément de maintien de poignée de poussée-traction (3) et à des positions correspondant aux rails de verrouillage (97) ; et les ressorts de siège de verrouillage (96) sont emmanchés sur les bielles de roulettes (7) entre les manchons de liaison (8) et les sièges de verrouillage (95) pour fournir des forces élastiques pour que les rails de verrouillage (97) soient encliquetés dans les encoches (321).

2. Chariot pliable multifonctionnel selon la revendication 1, dans lequel des extrémités, faisant face aux manchons de roulette (73), des sièges de verrouillage (95) sont pourvues de broches d'insertion (951), des extrémités, faisant face aux sièges de verrouillage (95), des manchons de roulette (73) sont pourvues de fentes (731) adaptées aux broches d'insertion (951), et les broches d'insertion (951) sont disposées pour être encliquetées dans les fentes (731) lorsque les roulettes (71) tournent pour être dépliées vers une position verticale par rapport à la partie porteuse.

3. Chariot pliable multifonctionnel selon la revendication 2, dans lequel une extrémité avant du cadre porteur (2) est pourvue de sièges de fixation (21) reliés et fixés à la plaque porteuse (1), les sièges de fixation (21) comprennent des surfaces d'extrémité intérieures (211) et des surfaces d'extrémité extérieures (212), l'arbre de pivot (5) est relié de manière pivotante à l'élément de maintien de poignée de poussée-traction (3) après avoir traversé les sièges de fixation (21) et le cadre porteur (2) à partir des surfaces d'extrémité extérieures (212) des sièges de fixation (21), l'élément de maintien de poignée de poussée-traction (3) est pourvu de plaques de verrouillage métalliques (32) à des positions correspondant aux surfaces d'extrémité intérieures (211) des sièges de fixation (21), les encoches (321) sont disposées dans les plaques de verrouillage métalliques (32), et les encoches (321) sont disposées pour être adaptées et verrouillées aux rails de verrouillage (97) lorsque la poignée de poussée-traction (4) est située sur la seconde position.

4. Chariot pliable multifonctionnel selon la revendication 3, dans lequel les appareils de liaison comprennent de premières parties correspondantes et de secondes parties correspondantes qui sont des pièces dentées (35, 74) adaptées les unes aux autres et engrenées les unes avec les autres, les pièces dentées (35) des premières parties correspondantes sont disposées sur les surfaces d'extrémité extérieures (212) des sièges de fixation (21) pour permettre à l'arbre de pivot (5) de passer à travers et sont reliées et fixées à l'élément de maintien de poignée de poussée-traction (3) par deux clous de liaison disposés pour être coaxiaux avec l'arbre de pivot (5), et les pièces dentées (74) de la seconde partie correspondante sont disposées sur les extrémités des manchons de roulette (73).

5. Chariot pliable multifonctionnel selon l'une quelconque des revendications 1 à 4, dans lequel l'élément de maintien de poignée de poussée-traction (3) est pourvu de manchons rotatifs (33) dans les canaux de coulissement (31), les manchons rotatifs (33) sont reliés de manière rotative, dans des positions déviées des centres des manchons rotatifs (33), à l'élément de poignée de poussée-traction (3) par des broches (332), et les tiges de support (41) sont insérées dans les manchons rotatifs (33) et sont capables de coulisser par rapport aux manchons rotatifs (33).

6. Chariot pliable multifonctionnel selon la revendication 5, dans lequel le premier mécanisme de verrouillage (6) comprend un premier bouton (61), de premières pièces de verrouillage (62) et un premier ressort (63), des extrémités gauche et droite du premier bouton (61) sont munies de broches d'entraînement (611), les premières pièces de verrouillage (62) sont munies de goulottes de guidage coulissantes (621) adaptées aux broches d'entraînement (611) et de broches de verrouillage (622) pour verrouiller la poignée de poussée-traction (4), deux premières pièces de verrouillage (62) sont prévues et sont respectivement disposées sur les extrémités gauche et droite du premier bouton (61), lorsque le premier bouton (61) est pressé, les broches d'entraînement (611) sont adaptées aux goulottes de guidage coulissantes (621) pour s'assurer que les deux premières pièces de verrouillage (62) sont proches l'une de l'autre, le premier ressort (63) est disposé sur le fond du premier bouton (61) pour fournir une force élastique pour réinitialiser le premier bouton (61), des trous d'évitement (331) permettant le passage des broches de verrouillage (622) sont disposés dans les manchons rotatifs (33) et à des positions correspondant aux broches de verrouillage (622), les tiges de support (41) sont pourvues de premiers trous de verrouillage (411) et de seconds trous de verrouillage (412), la poignée de poussée-traction (4) coulisse vers une position complètement pliée par rapport à l'élément de maintien de poignée de poussée-traction (3) lorsque les premiers trous de verrouillage (411) et les broches de verrouillage (622) sont appariés et verrouillés, et la poignée de poussée-traction (4) coulisse vers une position complètement dépliée par rapport à l'élément de poignée de poussée-traction (3) lorsque les seconds trous de verrouillage (412) et les broches de verrouillage (622) sont appariés et verrouillés.

7. Chariot pliable multifonctionnel selon la revendication 1, dans lequel un bord de surface supérieur de la plaque porteuse (1) est pourvu d'un bord périphérique (11) plus élevé que la surface supérieure de la plaque porteuse (1), et les côtés de la plaque porteuse (1) sont pourvus d'attaches de verrouillage (12).
